# EUROPÄISCHE PATENTANMELDUNG

(11) **EP 0 579 845 A1**
(43) Veröffentlichungstag der Anmeldung: **26.01.1994**
(21) Anmeldenummer: 92111996.2
(22) Anmeldetag: 14.07.1992
(51) Int. Cl.: H04Q 11/08

(54) **Koppelnetz für digitale Vermittlungssysteme aus eingangsseitig parallel geschalteten Koppeleinheiten**

(71) Anmelder: SIEMENS AKTIENGESELLSCHAFT, D-80333 München (DE)
(72) Erfinder: Schmidt, Lothar, Ing. grad., W-8080 Fürstenfeldbruck (DE); Storm, Jürgen, Ing. grad., W-8039 Puchheim (DE)

(57) **Zusammenfassung**

Die Koppeleinheiten enthalten einen Rahmenspeicher (R1 bis Rm) je Eingang zur Aufnahme der zugeführten Informationen, der zyklisch eingeschriebenen und wahlfrei ausgelesen wird. Durch eine Zusatzinformation in den die Ausleseadressen liefernden Haltespeichern (H) wird das Einschreiben in die Rahmenspeicher (R1 bis Rm) derart gesteuert, daß ein Einschreiben jeweils nur in denjenigen Rahmenspeicher erfolgt, aus dem aufgrund des auszuwählenden Koppelfeldausgangs ausgelesen werden soll. Hierdurch geringere Verlustleistung.

## Beschreibung

Die Erfindung betrifft ein Koppelnetz für digitale Vermittlungssysteme aus eingangsseitig parallel geschalteten Koppeleinheiten gemäß dem Oberbegriff des Patentanspruchs.

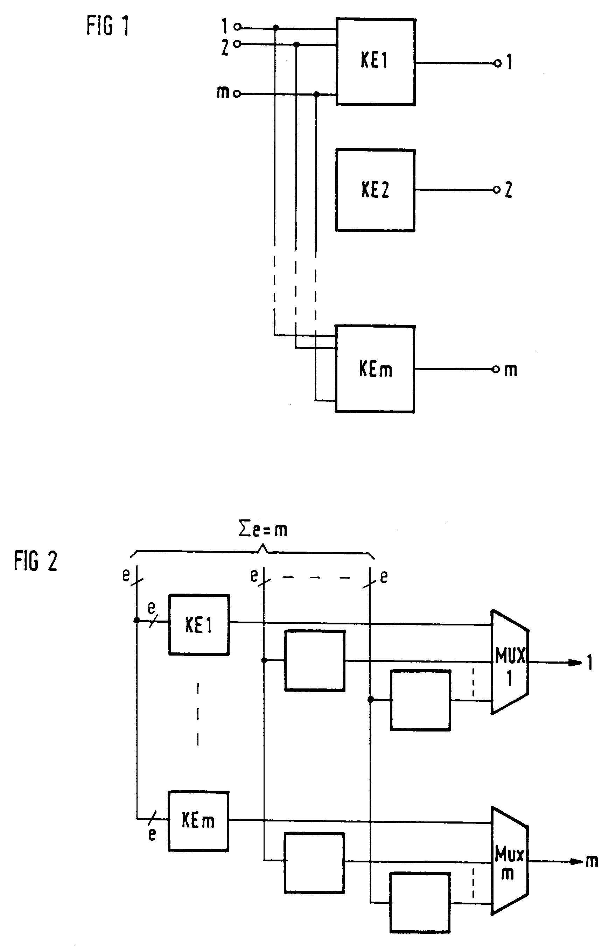

Ein solches Koppelnetz bzw. Teilkoppelnetz kann, wie auch die Figur 1 zeigt, aus Koppeleinheiten mit m Eingängen und wenigstens einem Ausgang, jedenfalls aber einer gegenüber der Anzahl von Eingängen geringen Anzahl von Ausgängen bestehen, wobei gleichgeordnete Eingänge dieser Koppeleinheiten miteinander verbunden sind. Die Anzahl der miteinander verbundenen Koppeleinheiten hängt hier davon ab, wieviele Ausgänge das Koppelnetz bzw. Teilkoppelnetze aufweisen. Im in der Figur 1 dargestellten Fall einer quadratischen Anordnung mit m Eingängen und m Ausgängen und Koppeleinheiten mit nur einem Ausgang sind m solcher Koppeleinheiten parallel geschaltet.

FIG 2 zeigt den Fall eines Koppelnetzes bzw. Teilkoppelnetzes mit m Eingängen und Ausgängen, bei dem die Anzahl der Eingänge einer Koppeleinheit kleiner als m ist . Es sind in diesem Fall unter der Voraussetzung von e Eingängen je Koppeleinheit m/e Gruppen von Anordnungen gemäß FIG 1 vorgesehen, deren gleichgeordnete Ausgänge jeweils durch einen von m Multiplexern MUX1 bis MUXm zu m Gesamtausgängen zusammengefaßt sind.

Für den Aufbau noch größerer Koppelnetze sind eine Mehrzahl solcher Teilkoppelnetze gemäß FIG 1 oder 2 über eine oder mehrere Raumkoppelstufen miteinander verbunden.

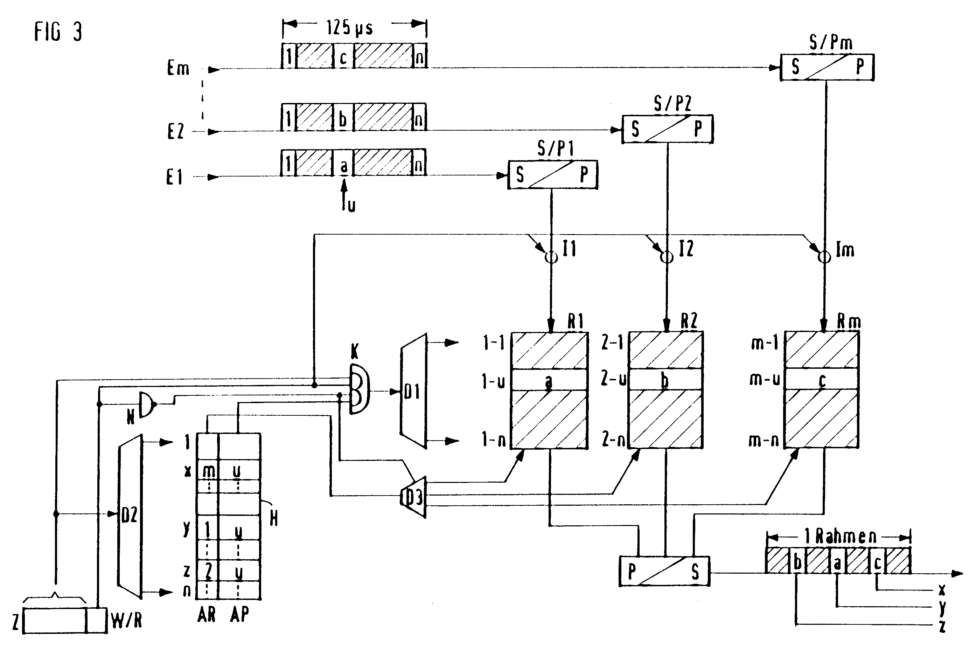

Die Figur 3 zeigt den internen Aufbau einer Koppeleinheit, wie sie bei der Anordnung gemäß FIG 1 verwendet wird.

Die dargestellte Einheit weist m Eingänge E1 bis Em und dementsprechend m Rahmenspeicher R1 bis Rm auf, die von den genannten Eingängen her über Serien-Parallel-Wandler S/P1 bis S/Pm erreicht werden können. Unter der Voraussetzung von Pulsrahmen mit n Kanälen weisen die Rahmenspeicher n Speicherplätze für jeweils ein PCM-Wort auf.

Das Einschreiben in die Rahmenspeicher erfolgt zyklisch, wozu ein Zähler Z über einen Dekoder D1 jeweils an gleichgeordnete Speicherzellen sämtlicher Rahmenspeicher n Einschreibsteueradressen sowie ein Schreibfreigabesignal W liefert. Das Auslesen aus den Rahmenspeichern erfolgt wahlfrei, wozu ein Haltespeicher H, der ebenfalls vom Zähler Z über einen Dekoder D2 zyklisch angesteuert wird, Auslesesteueradressen liefert. Die Auslesesteueradressen weisen zwei Teile zusammen mit einem Lesebefehlssignal R auf, nämlich eine Teiladresse AP, die Speicherplätze innerhalb der Rahmenspeicher kennzeichnet und eine Teiladresse AR, die die einzelnen Rahmenspeicher kennzeichnet. Die Speicherplatzteiladressen AP gelangen ebenfalls über den Dekoder D1 gleichzeitig an gleichgeordnete Speicherplätze sämtlicher Rahmenspeicher, wogegen die Speicherblockteiladresse AR über einen Dekoder D3 zur Ansteuerung jeweils eines der Rahmenspeicher an einen entsprechenden Lesefreigabeeingang derselben gelangen.

Der vorerwähnte Zähler Z liefert während der Dauer eines Pulsrahmens für n Kanäle 2n Ansteueradressen, die abwechselnd von dem erwähnten Schreibbefehlsignal W dem erwähnten Lesebefehlssignal R begleitet sind. Eine UND-Verknüpfung der Schreibbefehlssignale mit den sie begleitenden Ansteueradressen durch ein Koinzidenzglied K führt zur Weitergabe dieser Adressen über den vorerwähnten Dekoder D1 als Einschreibsteueradressen an die Rahmenspeicher. Eine Negierung der Lesebefehlssignale R durch einen Negator N und anschließende UND-Verknüpfung mit der vom Haltespeicher gelieferten Auslesesteuerteiladresse AR, ebenfalls mittels des Koinzidenzgliedes K, führt alternativ hierzu zur Weitergabe dieser Auslesesteuerteiladressen ebenfalls über den Dekoder D1 an die einzelnen Speicherzellen sämtlicher Rahmenspeicher. Das negierte Lesebefehlssignal R wirkt als Freigabesignal für Eingangsschaltungen I1 bis I3, über die von den Serien-Parallel-Wandlern kommende Informationen in die Rahmenspeicher gelangen können. Das negierte Lesebefehlssignal R wirkt auch als Freigabesignal für den Dekoder D3, über den die zweiten Teiladressen AR an die Rahmenspeicher gelangen nnd damit die Übernahme von Informationen aus jeweils einem der Rahmenspeicher am einen ausgangsseitigen Parallel-Serien-Wandler ermöglichen.

Nachstehend werden kurz die Vorgänge bei Zeitkanalumsetzungen mittels der beschriebenen Koppeleinheit erläutert.

Es werden hierbei gleichgeordnete Zeitkanäle auf den an die Eingänge E1, E2 und Em angeschlossenen Eingangszeitmultiplexleitungen betrachtet, die eine Zeitlage u haben und die im Falle der ersten Eingangsmultiplexleitung mit a, im Falle der zweiten Eingangsmultiplexleitung mit b und im Falle der Eingangsmultiplexleitung m mit c bezeichnet sind. Der Kanal a soll auf einen Kanal y und der Kanal b auf einen Kanal z und der Kanal c auf einen Kanal x auf der Ausgangsmultiplexleitung umgesetzt werden. In den den Zeitkanälen x, y und z entsprechenden Speicherplätzen des Haltespeichers H sind demnach als erste Ansteuerteiladressen AD jeweils die Adressen der Zeitlage u eingetragen. Als zweite Teiladresse AR steht im dem Zeitkanal x entsprechenden Speicherplatz die Adresse des Speichers m, in dem Zeitkanal y entsprechenden Speicherplatz die Adresse des Speichers 1 und in dem Zeitkanal x entsprechenden Speicherplatz die Adresse des Speichers 2.

Die Abläufe sind nun derart, daß die Inhalte der Kanäle a, b und c entsprechend ihrer Zeitlage u in die diesen Zeitlagen zugeordneten Speicherplätze 1-u, 2-u und m-u der Rahmenspeicher 1, 2 und m im Zuge des zyklischen Einschreibens eingetragen werden. Aufgrund der wahlfreien Ausleseansteuerung des Rahmenspeichers 1 während der Zeitlage y, des Rahmenspeichers 2 während der Zeitlage z und des Rahmenspeichers m während der Zeitlage x jeweils mit der Speicherplatzadresse u ergibt sich die gewünschte Zeitkanalumsetzung und damit auf der Ausgangsmultiplexleitung, wie in der Figur angedeutet, bezüglich der Zeitkanäle a, b und c die Zeitkanalfolge c, a, b.

Im Falle einer Koppeleinheit mit z.B. zwei Ausgängen müßte der Haltespeicher zweimal je Zeitlage zur Lieferung der Auslesesteueradressen für die Rahmenspeicher ausgelesen werden, wobei der erste Auslesevorgang die Information für den ersten Ausgang liefert und der zweite Auslesevorgang die Information für den zweiten Ausgang.

Wenn nun zur Bildung eines Koppelnetzes mehrere Koppeleinheiten, z.B. gemäß Figur 2 eingangsseitig parallel geschaltet sind, wie dies z.B. Figur 1 zeigt, dann erfolgt ein Einschreiben der Kanalinformationen a, b und c in die Rahmenspeicher sämtlicher Koppeleinheiten, obwohl bei dem angenommenen Beispiel lediglich aus dem Rahmenspeicher derjenigen Koppeleinheit ein Auslesen erfolgt, an die die betreffende Ausgangsmultiplexleitung angeschlossen ist.

Im Hinblick auf die Erzielung eines kostengünstigen und raumsparenden Aufbaus eines Koppelnetzes ist eine Ausbildung des Koppelnetzes aus hochintegrierten Bausteinen von Interesse. Hierbei wird eine möglichst große Anzahl von Eingängen und Ausgängen angestrebt, wobei jedoch durch die Verlustleistung des Bausteins Grenzen gesetzt sind.

Die Aufgabe der Erfindung besteht nun darin, ein Koppelnetzkonzept anzugeben, mit dem sich die Verlustleistung solcher Bausteine reduzieren läßt und damit größere Anschlußzahlen je Baustein zulässig sind.

Diese Aufgabe wird erfindungsgemäß durch die im Kennzeichen des Patentanspruchs angegebenen Maßnahmen gelöst.

Aufgrund des erfindungsgemäßen Konzepts wird unter relativ geringem Steuer- und Hardwareaufwand erreicht, daß das Einschreiben von PCM-Worten immer nur im Rahmenspeicher derjenigen Koppeleinheiten erfolgt, auf deren daran angeschlossene Ausgangsmultilexleitungen eine Durchschaltung erfolgen soll. Es wird damit die Leistung gespart, die beim vorstehend beschriebenen bekannten Koppelfeldkonzept für das Einschreiben auch in die Rahmenspeicher aller übrigen Koppeleinheiten erforderlich war.

Nachstehend wird die Erfindung anhand eines Ausführungsbeispiels unter Bezugnahme auf eine Zeichnung noch näher erläutert.

In der Zeichnung zeigen:
Die schon besprochenen Figuren 1, 2 und 3 ein Koppelnetz bzw. eine Koppelnetzeinheit der Art, bei der die Erfindung ansetzt,

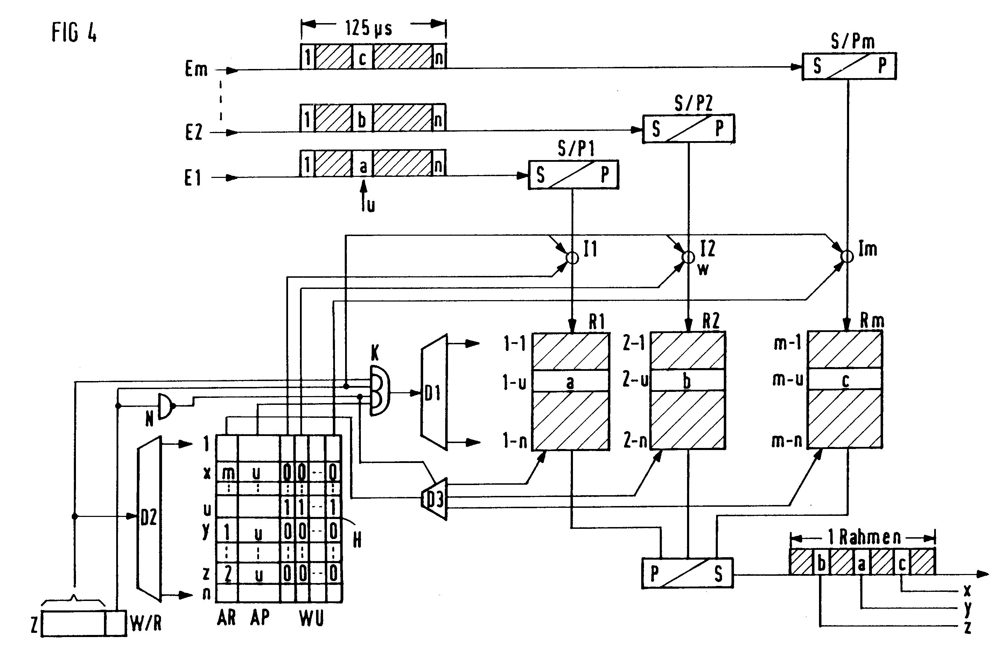

FIG 4 eine erfindungsgemäß ausgestaltete Koppelnetzeinheit gemäß FIG 3.

Die Koppeleinheit gemäß FIG 4, bei der gleiche Teile mit den gleichen Bezugszeichen bezeichnet sind wie bei der Koppeleinheit gemäß FIG 3, unterscheidet sich von dieser Koppeleinheit im wesentlichen durch eine Erweiterung des Haltespeichers H um einen Speicherraum, in dem als Ergänzung der Teilnehmeradressen AR und AD rahmenspeicherindividuelle Einschreibübernahmebits WÜ gespeichert sind. Diese Einschreibübernahmebits werden mit den vorerwähnten vom Zähler Z gelieferten Schreibbefehlbits W zu einem Ansteuersignal für die Eingangsschaltungen I1 bis Im verknüpft, über die die von den Eingangsmultiplexleitungen kommenden Informationen an die Rahmenspeicher R1 bis Rm gelangen.

Entsprechend dem angenommenen Beispiel, daß die Zeitkanäle der Zeitlage u auf den an die Eingänge E1, E2 und Em angeschlossenen Eingangszeitmultiplexleitungen in die entsprechenden Rahmenspeicher, also R1, R2 und Rm der betrachteten Koppeleinheit eingeschrieben werden sollen, enthält der Haltespeicher in dem der Zeitlage u entsprechenden Speicherplatz auf den den Eingängen E1, E2 und Em entsprechenden Positionen den Eintrag eines 1-Bits. Die übrigen Schreibübernahmebits dieses Speicherplatzes u weisen den Binärwert 0 auf.

Bei allen übrigen Koppeleinheiten, die entsprechend der Darstellung in FIG 1 das Koppelnetz bilden, befinden sich an den Positionen der Schreibübernahmebits für die Eingänge E1, E2 und Em im Speicherplatz u Einträge von 0-Bits. Auf diese Weise ist sichergestellt, daß, wie gewünscht die Zeitkanalinhalte der Zeitkanäle mit der Zeitlage u, die auf den an die Eingänge E1, E2 und Em angeschlossenen Eingangsmultiplexleitungen angeliefert werden, also der Zeitkanäle a, b und c, nur in die Rahmenspeicher R1, R2 und Rm derjenigen Koppeleinheit eingeschrieben werden, deren Eingangsschaltungen durchlässig gesteuert sind, nämlich derjenigen Koppeleinheit, an deren Ausgangsmultiplexleitung dem angenommenen Beispiel entsprechend diese Kanäle vermittelt werden sollen.

Aufgrund der erfindungsgemäßen Maßnahme würde z.B. bei der Verwendung von Koppeleinheiten mit 16 Eingängen und 2 Ausgängen bei den einzelnen der 16 Rahmenspeicher die Anzahl der Einschreibzyklen pro Pulsrahmen jeweils auf 1/8 reduziert, da insgesamt nicht mehr Informationen je Koppeleinheit eingeschrieben werden, als auf 2 Ausgangsleitungen ausgelesen werden können, also insgesamt die Informationsinhalte zweier Pulsrahmen.

Die Gesamtzahl der Lese-/Schreibzyklen einer Koppeleinheit verringert sich also bei n Zeitkanälen pro Pulsrahmen von (16 + 2) x n auf (2 + 2) x n, was einer Verringerung der Verlustleistung für Lese-/Schreibzyklen um den Faktor 4,5 entspricht.

## Patentansprüche

1. Koppelnetz für digitale Vermittlungssysteme aus wenigstens einer Gruppe eingangsseitig parallel geschalteter Koppeleinheiten mit jeweils m Eingängen und einer demgegenüber kleinen Anzahl von Ausgängen, die je Eingang vorgesehene Rahmenspeicher mit einer Speicherkapazität für die Informationen eines Pulsrahmens enthalten, in die unter zyklischer Adressierung ihrer Speicherplätze von den an die Eingänge angeschlossenen Multiplexleitungen eingeschrieben wird und aus denen aufgrund der Ansteuerung durch einen gemeinsamen Haltespeicher wahlfrei auf die an die Ausgänge angeschlossenen Multiplexleitungen ausgelesen wird,
**dadurch gekennzeichnet,**
daß der Haltespeicher (H) jeweils zusammen mit den Ansteueradressen für die Rahmenspeicher (R1 bis Rm) eingangsindividuelle Entscheidungsbits (WÜ) liefert, die darüber entscheiden, ob die zyklisch gelieferten Einschreibadressen für die einzelnen Rahmenspeicher (R1 bis Rm) wirksam werden oder nicht und die so gesetzt sind, daß ein Informationseintrag in einen Rahmenspeicher nur dann erfolgt, wenn die betreffende Information auch wieder aus diesem Rahmenspeicher ausgelesen werden soll.
